# EUROPEAN PATENT SPECIFICATION

(11) **EP 0 600 554 B1**
(45) Date of publication and mention of the grant of the patent: **03.02.1999**
(21) Application number: 93203333.5
(22) Date of filing: 29.11.1993
(51) Int. Cl.: C08G 67/02

(54) **Preparation of copolymers of carbon monoxide with ethylenically unsaturated compounds, composition and method for melt processing**
Herstellung von Copolymeren aus Kohlenmonoxid und ethylenisch ungesättigten Verbindungen, Zusammensetzungen und Schmelzprozess
Préparation de copolymères de monoxyde de carbone et de composés éthyléniquement insaturés, compositions et procédé de mise en oeuvre à l'état fondu

(30) Priority: 30.11.1992 EP 92203697
(43) Date of publication of application: 08.06.1994
(73) Proprietor: SHELL INTERNATIONALE RESEARCH MAATSCHAPPIJ B.V., 2596 HR Den Haag (NL)
(72) Inventor: Jordaan, Johannes Clemens Maria, NL-1031 CM Amsterdam (NL); Smaardijk, Abraham Adriaan, NL-1031 CM Amsterdam (NL); Mul, Wilhelmus Petrus, NL-1031 CM Amsterdam (NL); Mulder, Jan Harm, NL-1031 CM Amsterdam (NL); Lednor, Peter William, NL-1031 CM Amsterdam (NL); Gerard, Eric-Jack, B-1348 Ottignies Louvain-la-Neuve (BE)

(56) References cited:
- EP-A- 0 478 088
- US-A- 5 021 496
- US-A- 5 122 564

## Description

The invention relates to a process for the preparation of linear alternating copolymers of carbon monoxide with one or more compounds comprising an ethylenically unsaturated bond, to compositions containing the copolymers and to a method for melt processing the copolymers.

It is known that linear copolymers in which the units originating from carbon monoxide substantially alternate with the units originating from the ethylenically unsaturated compound(s), may be prepared by contacting the monomers under polymerization conditions in the presence of a suitable catalyst.

Convenient methods for preparing such copolymers are disclosed in, inter alia, EP-A-181014 and EP-A-248483. The copolymers obtained according to these, or similar preparation methods, are relatively high molecular weight compounds, having established utility as thermoplastics in the production of shaped articles, such as containers for foods and drinks and parts for the car industry and for various applications in the domestic sphere.

For these uses and the like, the copolymers have to be melt processed, i.e. they have to be brought in molten state so that they can be moulded or extruded. In view of their high melting point, usually of 200 °C or even higher, the melt stability of the copolymers may become a problem if the copolymers are to remain in molten state for a substantial length of time. The longer the copolymers are subjected to high temperatures, the more they are susceptible to degradation caused by chemical reactions.

The formation of degradation products will usually be at the expense of the properties of the copolymer product.

The presence of specific impurities in the copolymers may have a negative effect on the stability of the copolymers whilst being processed at high temperatures.

The origin of these impurities is not always known, but in many cases they are apparently introduced in the reactor, together with the starting materials, the catalyst or with the diluent or solvent, if any.

It has already been proposed to reduce the content of typical impurities, such as sulphur in sulphidic form and iron present as iron carbonyl, which impurities often occur in the carbon monoxide feedstock, in particular if the carbon monoxide used is a commercial grade feedstock, such as commonly available at (petro)chemical sites. Whilst a reduction in the content of these impurities in the carbon monoxide monomer feed has a favourable effect on the average reaction rate at which the polymerization proceeds, it has little effect on the melt stability of the copolymers obtained.

It has now been found that the melt stability of the copolymers of the invention is adversely affected by the presence therein of trace quantities of alkali(ne earth) metal salt impurities. It has also been found that a significant improvement in melt stability is achieved by reducing the alkali(ne earth) metal salt content of the produced copolymers or by adding to a copolymer which is contaminated with alkali(ne earth) metal salt a substance which is able to bind the contaminating salt. Evidently, both treatments may be combined as well.

The detrimental influence of minute quantities of alkali(ne earth) metal salts on the melt stability of the copolymers is surprising in view of the prior art. For example, in EP-A-285218 it is proposed to treat the copolymers with alkali metal N,N-diethyldithiocarbamate as a step in reducing the concentration of palladium or nickel catalyst remnants for the purpose of improving the copolymers' melt stability. In US-A-3948850 it is proposed to stabilise ethylene/carbon monoxide copolymers having up to 50 %-mol carbon monoxide by adding thereto a dihydro phosphoric acid salt of an alkali(ne earth) metal.

Calcium hydroxyapatite zinc aluminates, alumina hydrogel and decomposition products thereof, and zeolites containing a metal of Group 2 of the Periodic Table, such as calcium, have been recommended as melt stabilizers for the linear alternating copolymers of carbon monoxide and ethylenically unsaturated compounds (cf. EP-A-478088 and GB-A-2249549, respectively). The alumina hydrogels of EP-A-478088 can be represented by the formula Al₂O₃.pH₂O where O<p<10. The present invention surprisingly teaches that trace quantities of the alkali(ne earth) metal salts which may recommended as melt stabilizers for the linear alternating copolymers be present in the polymers need to be removed or need to be bound in order to stabilize the copolymers, as opposed to the prior art which teaches that these metals have to be added. With hindsight it is conceivable that the stabilization achieved by the addition of calcium hydroxyapatite or a Group 2 metal containing zeolite may (in part) have been the result of interaction of the apatite or the zeolite with any alkali(ne earth) metal salt present in the polymer. However, from the documents nothing can be learnt in that respect and since there is no mention of removal of stabilisers from the copolymers, a reduction of the alkali(ne earth) metal salt content thereof has not been effected. For completeness' sake it is noted that in GB-A-2249549 there is a single mention of a destabilizing effect of sodium and potassium containing zeolite when added to the copolymer in quantities which, however, exceed by far the trace level.

Accordingly, the invention relates to a process for the preparation of linear alternating copolymers of carbon monoxide and one or more ethylenically unsaturated compounds by reacting the monomers under polymerization conditions in the presence of a suitable catalyst system, one or more components present in the reaction mixture being contaminated with alkali(ne earth) metal salt(s), which process involves a treatment by which at least part of the alkali(ne earth) metal salt is removed such that the total amount of alkali(ne earth) metals present in the copolymerization product is decreased, in particular to a value of less than 1 part per million by weight, on the understanding that the treatment does not consist of adding to the copolymerization product a hydroxy apatite, a zinc aluminate, an alumina hydrogel or a decomposition product thereof, or a zeolite type trivalent metal silicate.

The invention also relates to a copolymer composition comprising a linear alternating copolymer of carbon monoxide and one or more ethylenically unsaturated compounds, a contaminant comprising an alkali(ne earth) metal salt and a stabilizing quantity of a substance which is able to bind at least part of the alkali(ne earth) metal salt, the substance being other than a hydroxyapatite, a zinc aluminate, an alumina hydrogel or a decomposition product thereof, or a zeolite-type trivalent metal silicate.

Finally, the invention also relates to a method for melt processing a linear alternating copolymer of carbon monoxide and one or more ethylenically unsaturated compounds, wherein a linear alternating copolymer of carbon monoxide and one or more ethylenically unsaturated compounds which contains a contaminant comprising an alkali(ne earth) metal salt is mixed with a stabilizing quantity of a substance which is able to bind at least part of the alkali(ne earth) metal salt, the substance being other than a hydroxyapatite, a zinc aluminate, an alumina hydrogel or a decomposition product thereof, or a zeolite-type trivalent metal silicate, and wherein the resulting mixture is melt processed.

As the alkali(ne earth) metal contaminants are present in the form of salts, for example sodium chloride, sodium acetate or sodium silicate, the treatment according to this invention effects, in addition to a reduction of the alkali(ne earth) metal content, also a reduction of the content of the accompanying anion of the copolymerization product.

Depending on the origin of the alkali(ne earth) metal salt impurities, the treatment resulting in a decrease in alkali(ne earth) metal content of the copolymers produced, may be carried out after, during or prior to the copolymerization reaction. For example, in the event that the impurities are introduced into the reactor, as contaminants in more than one of the reactor components, the treatment will preferably be carried out during the polymerization reaction.

In the event that the source of alkali(ne earth) metal salt impurities can be attributed to a specific component in the reaction mixture, it is advantageous to subject only that component to the said treatment, prior to its use in the polymerization reaction. For example, if the copolymerization is carried out in the presence of a diluent which is contaminated with alkali(ne earth) metal salts, it is preferred to reduce the alkali(ne earth) metal salt content of the diluent before introducing the diluent into the reactor. Thus, when said treatment is carried out during or prior to the copolymerization reaction and comprises treating one or more alkali(ne earth) metal(s) containing components of the reaction mixture before being introduced into the copolymerization reactor, the alkali(ne earth) metal content of the reaction mixture is reduced.

It has been observed that the alkali(ne earth) metal content of the copolymers, produced by a process not involving the treatment according to the invention, is usually in the range of 1-5 parts per million by weight (ppmw). Conceivably in some cases the alkali(ne earth) metal content may be up to 100 ppmw. The melt stability of these copolymers is usually unsatisfactory. The treatment of the invention results in a substantial improvement in melt stability of the copolymers and is performed in particular such that the alkali(ne earth) metal content of the copolymers is reduced to less than 1 ppmw and preferably to less than 0.1 ppmw. When said treatment is carried out during or prior to the copolymerization the alkali(ne earth) metal salt(s) is/are preferably removed to such an extent that the alkali(ne earth) metal content of the reaction mixture is below 0.5 ppmw and more preferably below 0.05 ppmw.

For the removal of alkali(ne earth) metal salt(s) various treating methods may be elected. A convenient method may consist in contacting the reaction mixture, or one or more components thereof, such as a contaminated starting material or a contaminated diluent, with a solid material capable of binding or otherwise inactivating the contaminating alkali(ne earth) metal salts, followed by at least partly removal of the alkali(ne earth) metal-enriched solid material.

For example, if a liquid diluent or solvent is used which is contaminated with alkali metal salts, it is recommended to pass the impure liquid through a bed, substantially consisting of solid adsorbent, followed by passing the purified liquid to the reactor. Alternatively, finely divided solid adsorbent particles may be admixed with the contaminated liquid, followed by filtering off the alkali metal-enriched adsorbent particles and introducing the filtrate into the reactor.

The treatment of alkali(ne earth) metal salt-contaminated monomer feedstocks, in particular liquid feedstocks such as propene, may be carried out in a similar manner. In principle the alkali(ne earth) metal-enriched adsorbent, when formed during or after the polymerization process, is separated from the copolymers, e.g. by selectively dissolving the latter and removing the alkali(ne earth) metal-enriched adsorbent from the solution. However, only a few solvents are capable of selectively dissolving the copolymers. Therefore it is preferred that a treatment comprising the use of a solid adsorbent is carried out at a stage before the copolymers are formed.

Preferred adsorbents are solid materials, capable of adsorbing, generally as a heterogeneous adsorbent, a major part of the alkali(ne earth) metal ions, such as sodium, lithium and potassiums ions, and a major part of the accompanying anions, such as chloride, bromide and acetate ions. Suitable are e.g. ion-exchange resins, zeolites and basic solid materials.

A good adsorbent for the treatment of the invention are apatites, having the general formula M₁₀(PO₄)₆XₙY₂₋ₙ, wherein M is barium, strontium or, preferably, calcium, n is 0, 1 or 2, X is OH and Y is fluorine. Calcium hydroxyapatite is a naturally occurring calcium phosphate, being the major constituent of bone and tooth mineral. It is a crystalline, material, also referred to as tribasic calcium phosphate. However, when the treatment of this invention involves treating a lower aliphatic alcohol, for example methanol, or a mixture containing a substantial quantity of a lower aliphatic alcohol it is less preferred to use an apatite as the adsorbent because, as is known in the art, apatites may not be completely inert in lower aliphatic alcohols.

Suitable ion exchange resins are typically resins containing strong acidic groups, such as sulphonic acid groups, as the cation exchanging groups on a matrix. For the exchange of anions accompanying the alkali(ne earth) metal a strong basic ion exchange resin can be used, such as a resin containing quaternary ammonium hydroxide groups, for example of the benzyltrimethylammonium type, on a matrix. Very suitably the cation and anion exchange resins are used in a mixed bed or a resin is used which combines the anion and cation exchanging groups on a single matrix. Cross-linked polystyrene is a suitable matrix for ion exchange resins, other matrices being suitable as well. Very suitable systems of one or more ion exchange resins are those which can be used in water demineralisation processes. Very good results have been obtained with a mixed bed ion exchange resin.

Although the amount of solid adsorbent is not critical, usually a limited amount is used, in order to avoid the handling and removal of large amounts of material. Preferably the amount of solid adsorbent is less than 5% by weight of the treated contaminated component(s) of the reaction mixture. Most preferably the amount of solid adsorbent is selected in the range of 0.000001 to 0.5% by weight of the component(s) to be treated.

It may be convenient to use the electrical conductivity as a characterization of liquid components, which are usually essentially organic and non-ionic by nature, after they have been treated with an adsorbent. Suitably the electrical conductivity is lower than 200 µS/m, preferably less than 100 µS/m and in particular less than 60 µS/m. Throughout this application the electrical conductivities are specified as conductivities measured at 20 °C.

A treatment according to this invention which does not involve the use of a solid adsorbent may comprise whashing the copolymer powder as prepared in the reactor with a washing liquid which is able to remove alkali(ne earth) metal salts from the copolymer. The invention also relates to a washing per se comprising washing a preformed reactor powder of the copolymer which contains a contaminant comprising an alkali(ne earth) metal salt with a washing liquid which is able to remove at least part of the alkali(ne earth) metal salt(s) from the copolymer, preferably such that after the washing the total amount of alkali(ne earth) metals present in the copolymer is less than 1 part per million by weight.

Suitable washing liquids may be diluents in which the copolymer is insoluble or virtually insoluble and which are substantially free of alkali(ne earth) metal salts, for example by being prior treated with one or more ion exchange resins as described hereinbefore. The washing liquid is suitably essentially organic, polar and non-ionic by nature, for example an aliphatic alcohol or ketone having up to four carbon atoms, and has typically an electrical conductivity of less than 200 µS/m. It may be advantageous to have water present in such a washing liquid, for example 1 - 20 %vol relative to the resultant liquid mixture, with an equal content of alkali(ne earth) metal(s), relative to the total weight of the liquid. The washing liquid may also essentially consisting of water having an electrical conductivity of less than 1000 µS/m, in particular less than 600 µS/m. Very good results can be obtained by washing a copolymer powder, contaminated with alkali(ne earth) metal salt, with methanol or with methanol/water (95/5 v/v) which has prior been made essentially free of alkali(ne earth) metal salt by a treatment with one or more ion exchange resins.

Another example of a suitable washing liquid may be a diluent in which the copolymer is insoluble or virtually insoluble and to which one or more complexing agents for the contaminating alkali(ne earth) metal ion(s) have been added, such as crown ethers.

The catalyst system used in the process of the invention is preferably a catalyst containing one or more metals of Group VIII of the Periodic Table. The amount of such a catalyst is not critical and may vary within wide ranges, e.g. between 10⁻⁷ and 10⁻² gram atom of Group VIII metal per mol of ethylenically unsaturated compound to be copolymerized. Preferably the amount is between 10⁻⁶ and 10⁻⁴ on the same basis. With a view at their thermal stability copolymers are typically prepared which contain less that 20 ppmw Group VIII metal, preferably less than 10 ppmw and in particular less than 5 ppmw.

The metals of Group VIII include iron, cobalt, nickel, ruthenium, rhodium, palladium, osmium, iridium and platinum. Among these, cobalt, nickel, ruthenium, rhodium and palladium are preferred. In particular a catalyst system based on palladium, is preferred.

Very suitable catalyst systems are catalytically active compositions based on a palladium compound, an anion of an acid with a pKa of less than 6, preferably less than 4, and a bidentate ligand.

Preferred bidentate ligands may be indicated by the general formula R¹R²M¹-R-M²R³R⁴ wherein each of M¹ and M² independently represents a phosphorus, arsenic, antimony or nitrogen atom, each of R¹, R², R³ and R⁴ independently represents a substituted or non-substituted hydrocarbyl group and R represents a divalent organic bridging group containing at least two carbon atoms in the bridge.

Preferably M¹ and M² each represent a phosphorus atom. Suitably R¹, R², R³ and R⁴ represent the same, optionally substituted hydrocarbyl group, preferably an aromatic group such as phenyl, diphenyl or naphthyl group or an aromatic group containing one or more substituents, in particular polar substituents such as halogen atoms, halogenated alkyl groups, alkoxy groups such as methoxy, ethoxy or isopropyloxy groups, hydroxyl, (di)alkylamino or ester groups.

Preferably one or two substituents are located at the ortho position(s) in the aromatic ring with respect to the phosphorus atom to which that aromatic group is linked.

The copolymerization process of the invention may proceed in the gasphase, but is typically carried out by contacting the monomers in the presence of a suitable diluent with the catalyst system, usually a solution of a compound of a Group VIII metal in a suitable solvent, such as a lower ketone or a lower aliphatic alcohol, for example acetone or methanol. Suitable diluents are typically those in which the formed copolymers are insoluble or virtually insoluble. The diluent is preferably a protic compound, such as an alcohol, for example methanol, isopropanol and butanol-1. As explained above, the diluent may have been subjected to a treatment for reducing the alkali(ne earth) metal content thereof, before being introduced into the reactor.

Ethylenically unsaturated compounds suitable to be copolymerized with carbon monoxide in the process of the invention include compounds consisting exclusively of carbon and hydrogen and compounds which in addition contain one or more heteroatoms, typical examples being unsaturated esters such as methyl acrylate. Preferably, however, unsaturated hydrocarbons are used, in particular lower olefins such as ethene, propene and butene-1 and mixtures thereof and olefins substituted by an aromatic group such as styrene and p-alkylstyrenes. Ethene and mixtures comprising ethene and propene are in particular preferred starting materials. The molar ratio between the monomers, viz. carbon monoxide and the ethylenically unsaturated compound(s), is suitably selected in the range of 5:1 to 1:5, preferably in the range of 1.5:1 to 1:1.5.

The copolymerization reaction is suitably carried out at a temperature in the range of 10-200 °C and a pressure in the range of 1 to 200 bar. Preferred temperatures are in the range of 20-180 °C, in particular in the range of 30-150 °C. Preferred pressures are selected in the range of 5 to 100 bar.

In other embodiments of this invention the stability of a linear alternating copolymer of carbon monoxide and one or more ethylenically unsaturated compounds which is contaminated with an alkali(ne earth) metal salt is improved by using as a stabiliser a substance which is able to bind at least a part of the alkali(ne earth) metal salt. As discussed hereinbefore, the use of a stabilizing quantity of a hydroxyapatite, a zinc aluminate, an alumina hydrogel or a decomposition product thereof, or a zeolite-type trivalent metal silicate in these polymers is know in the art and is excluded from the protection of these embodiments of the invention.

The alkali(ne earth) metal salt binding substances used in the compositions of the invention and in the method of melt processing according to the invention may be organic or inorganic. Examples of suitable organic substances may be ion exchange resins mentioned hereinbefore. Inorganic substances which possess ion adsorbing capacity are phosphates other than hydroxyapatites, for example zirconium phosphates, such as alpha- and gamma-zirconium phosphate, and lanthanium phosphate. Good stabilizing activities have been found when using one or more of barium phosphate, lanthanium phosphate, magnesium orthophosphate, calcium silicium phosphate, magnesium silicium phosphate, aluminium phosphate and fluorapatite (i.e. a mineral of the formula Ca₁₀(PO₄)₆F₂). Preferred stabilisers are selected from the group consisting of lanthanium phosphate, magnesium silicium phosphate and calcium silicium phosphate.

The quantity of the alkali(ne earth) metal salt binding substances to be used is not critical as long as melt stabilization of the copolymer is effected. Usually a quantity in the range of from 0.01 %w to 5.0 %w, relative to the quantity of the copolymer, will be effective, in particular from 0.02 %w to 1.0 %w and more in particular from 0.05 %w to 0.5 w%, on the same basis.

These substances are frequently solids thus forming a solid phase in the compositions of the invention. They are preferably used as a finely divided material, typically having a volume-average particle size in the range of 0.1 - 50 µm, in particular in the range of 0.5 - 10 µm.

The melt stability of the copolymers may be further improved by adding one or more (further) stabilizers, conveniently by dry blending of the copolymers and the stabilizing compounds, at any downstream stage of the process. Materials known to be suitable in this respect, include inorganic or organometallic compounds, such as zinc aluminates, alumina hydrogels and cupric chromite. As mentioned hereinbefore, calcium hydroxyapatite and calcium containing zeolites have also been recommended as a suitable stabilizer. Also other additives may be included in the compositions, such as antioxidants, dyes, fillers or reinforcing agents, fire resistant materials, mould release agents, colorants and other materials designed to improve the processability of the polymers or the properties of the resultant blend.

The melt processing according to this invention may be conventional and may include extruzion and injection moulding into sheets, plates and shaped articles.

The invention is illustrated by the following non-limiting experiments and examples.

### Experiment 1

The influence of trace quantities of various salts on the melt stability of a linear alternating copolymer of carbon monoxide, ethene and propene was measured as follows.

Samples of the linear alternating copolymer of carbon monoxide, ethene and propene (melting point 222 °C) were loaded with any one of the salts, as indicated in Table I, by impregnating the samples with a solution of the salt in de-ionized (double-distilled) water and drying. For comparison one copolymer sample was treated in the same way with de-ionized water, but without a salt dissolved therein. The resultant copolymer powders were compression moulded to form 1 mm thick sheets by pressing at 250 °C for 0.5 minutes at 4 kg/cm² and 1.5 minutes at 40 kg/cm². Circular discs cut from the sheets were subjected to dynamic rheology testing, i.e. measurement of dynamic shear moduli, at a temperature of 275 °C, using an angular frequency of 1 rad/s and the sample being hold between aluminium discs at a distance of 0.9 mm. The aluminium discs were disposable discs, pretreated with an Alodine S solution. The cross-over time (COT), which is defined as the time elapsed since sample loading until the loss factor (i.e. the ratio of the loss modulus G'' and the storage modulus G') equals 1, is indicated in Table I for each sample. A higher cross-over time is indicative for a better thermal stability of the copolymer.

**Table I**

| Salt (metal content of polmer, ppmw) | COT minutes |
|---|---|
| - | 32 |
| Sodium chloride (5.0) | 10 |
| Sodium bromide (5.0) | 11 |
| Sodium iodide (5.0) | 13 |
| Sodium acetate (5.0) | 7 |
| Sodium nitrate (5.0) | 12 |
| Sodium sulphate (5.0) | 23 |
| Sodium perchlorate (5.0) | 5 |
| Potassium bromide (8.6) | 8 |
| Magnesium sulphate (5.3) | 15 |
| Calcium chloride (8.2) | 1 |
| Barium bromide (30.2) | 2 |

These experiments show that trace amounts of alkali(ne earth) metal salts contaminating the linear alternating copolymers have a detrimental influence on the copolymers' melt stability.

### Experiment 2

The thermal stability of a model compound, representing a carbon monoxide/ethene copolymer, and the influence of (the removal of) trace quantities of alkali(ne earth) metal impurities thereon were measured as follows. The model compound, tetradecan-3,6,9,12-tetraone, was prepared by using methods described by H. Stetter, Angew. Chem. 88 (1976) pp. 695 ff.

Tetradecan-3,6,9,12-tetraone (1 g, containing 300 ppmw sodium) was dissolved in 50 ml dichloromethane which was essentially free of alkali(ne earth) metal. Calcium hydroxyapatite (0.04 g, containing less than 0.1 %w sodium) was suspended in this solution. The resulting suspension was stirred for 1 hour and filtered. The tetradecan-3,6,9,12-tetraone was recovered by evaporating the filtrate to dryness. Sodium analysis of the recovered model compound gave a sodium content of 20 ppmw. The calcium hydroxyapatite remaining on the filter was dried; its sodium content was 0.58 %w.

Samples of the fresh and of the recovered tetradecan-3,6,9,12-tetraone were heated at 240 °C under nitrogen. GLC analysis carried out after 24 hours of heat exposure revealed that the untreated tetradecan-3,6,9,12-tetraone was completely converted (degraded) and that 94 % of the recovered tetradecan-3,6,9,12-tetraone was converted into a range of decomposition products.

The above experiment was repeated using 1 g of a different sample of the tetradecan-3,6,9,12-tetraone and using 0.04 g lanthanium phosphate instead of calcium hydroxyapatite.

Elemental analyses of the fresh and the recovered tetradecan-3,6,9,12-tetraone were as follows: 9 ppmw and 2 ppmw sodium, 3.5 ppmw and 0.6 ppmw calcium, 0.2 ppmw and 0.2 ppmw magnesium, less than 0.5 ppmw and 35 ppmw lanthanium, respectively. The elemental analyses of the fresh and the recovered lanthanium phosphate were as follows: 55 ppmw and 500 ppmw sodium, 45 ppmw and 180 ppmw calcium, less than 30 ppmw and 70 ppmw magnesium, respectively.

GLC analyses after heating the fresh and the recovered tetradecan-3,6,9,12-tetraone (240 °C, 20 hours) revealed that the 60 % of the fresh model compound was converted and 20 % of the recovered model compound.

These experiments show that calcium hydroxyapatite and lanthanium phosphate adsorb alkali(ne earth) metal contaminants and that the treatment of the model compound with calcium hydroxyapatite or lanthanium phosphate leads to an improvement in thermal stability. There is also a correlation between the rate of decomposition upon heating at 240 °C and the alkali(ne earth) metal content of the tested samples. It is evident that the melt stability of linear alternating copolymers of carbon monoxide and ethylenically unsaturated compounds can be improved by removing therefrom alkali(ne earth) metal salt contaminants in an analogous way.

### Example 1 (for comparison)

A carbon monoxide/ethene copolymer was prepared as follows. A 4000 ml autoclave equipped with a stirrer was charged with 1500 ml methanol/water (95/5 v/v) containing alkali metal salt contaminants and having an electrical conductivity of 360 µS/m. The reactor was closed and the air therein was removed by pressurising with carbon monoxide to 15 bar and releasing the pressure. This procedure of pressurising and pressure release was repeated three times. The temperature in the autoclave was raised to 88 °C and a mixture of carbon monoxide and ethene in a 2:1 ratio was introduced until the pressure was 26 bar. A catalyst solution containing 0.0065 mmol palladium acetate, 0.0069 mmol 1,3-bis[bis(2-methoxyphenyl)-phosphinolpropane, 0.0040 mmol trifluoroacetic acid and 4.3 ml acetone was added. The acetone used for preparing the catalyst solution contained alkali metal salt contaminants and had an electrical conductivity of 75 µS/m.

After a period of 17 hours the polymerisation was terminated by cooling the reaction mixture to room temperature and releasing the pressure. Solid powdery product was filtered off, washed with methanol/water, which was taken from the same stock as the diluent used in the polymerization, and dried.

A sample of the obtained white polymer powder was compression moulded using substantially the procedure as described in Experiment 1. The sheet obtained was whitish with a grizzly shade.

### Example 2

A carbon monoxide/ethene polymer was prepared substantially as described in Example 1, but with the differences that prior to their use in the preparation the methanol/water and the acetone were both perculated over a mixed bed anion/cation exchange resin purchased under the trade name MILLIPORE ION-EX CARTRIDGE. The electrical conductivities of the perculated methanol/water and acetone were 57 µS/m and 38 µS/m, respectively.

The obtained polymer powder was white. The sheet obtained by compression moulding this powder was whitish, not having a grizzly shade.

The improved colour of the compression moulded sheet, compared with the colour of the sheet obtained in Example 1 is indicative for an improved thermal stability of the copolymer.

### Example 3

A carbon monoxide/ethene polymer was prepared substantially as described in Example 1. A sample of the copolymer powder obtained was washed four times with methanol which methanol was prior perculated over a mixed bed anion/cation exchange resin purchased under the trade name MILLIPORE ION-EX CARTRIDGE. The electrical conductivity of the perculated methanol was 23 µS/m.

The washed copolymer powder was compression moulded and tested in dynamic rheology testing substantially as described in Experiment 1. The cross-over time was 20 minutes.

The electrical conductivities of the washing liquids obtained in each washing were 650 µS/m, 200 µS/m, 60 µS/m and 52 µS/m, respectively, indicating that alkali metal salt impurities were removed from the copolymer in each of the washings.

For comparison a sheet was compression moulded from a sample of the un-washed copolymer and a circular disc cut from the sheet was subjected to the dynamic rheology testing. The cross-over time was 14 minutes.

The improved thermal stability of the washed sample is evident from a comparison of the cross-over times.

### Examples 4 - 13

Samples of a linear alternating copolymer of carbon monoxide, ethene and propene (melting point 222 °C), which was contaminated with alkali metal salt, were powder blended with 0.25 %w or 0.20 %w (calculated on the weight of the composition) of any one of the phosphates indicated in Table II. The resultant powder mixtures were compression moulded and tested in dynamic rheology testing substantially as described in Experiment 1. For comparison a sample of the copolymer was tested un-blended. The cross-over times (COT) found are indicated in Table II.

**Table II**

| Example | Phosphate (concentration, %w) | COT minutes |
|---|---|---|
| 4 | - *) | 22 |
| 5 | Calcium hydroxyapatite (0.25) *) | 39 |
| 6 | Lanthanium phosphate (0.25) | 39 |
| 7 | Barium phosphate (0.25) | 33 |
| 8 | Calcium fluorapatite (0.25) | 28 |
| 9 | Magnesium orthophosphate (0.20) | 37 |
| 10 | Calcium phosphate (0.20) | 31 |
| 11 | Calcium silicium phosphate (0.20) | 39 |
| 12 | Magnesium silicium phosphate (0.20) | 30 |
| 13 | Aluminium phosphate (0.20) | 29 |

| | | |
|---|---|---|
| *) for comparison, not according to invention | | |

## Claims

1. A process for the preparation of linear alternating copolymers of carbon monoxide and one or more ethylenically unsaturated compounds by reacting the monomers under polymerization conditions in the presence of a suitable catalyst system, one or more components present in the reaction mixture being contaminated with alkali(ne earth) metal salt(s), which process involves a treatment by which at least part of the alkali(ne earth) metal salt is removed such that the total amount of alkali(ne earth) metals present in the copolymerization product is decreased, on the understanding that the treatment does not consist of adding to the copolymerization product a hydroxy apatite, a zinc aluminate, an alumina hydrogel or a decomposition product thereof, or a zeolite-type trivalent metal silicate.

2. A process as claimed in claim 1, characterized in that in the copolymerization product the total amount of alkali(ne earth) metals is less than 1 part per million by weight.

3. A process as claimed in claim 2, characterized in that the total amount of alkali(ne earth) metals is less than 0.1 part per million by weight.

4. A process as claimed in any of claims 1-3, characterized in that said treatment is carried out during or prior to the copolymerization reaction and comprises treating one or more alkali(ne earth) metal(s) containing components of the reaction mixture before being introduced into the copolymerization reactor.

5. A process as claimed in claim 4, characterized in that the said treatment consists in contacting one or more of the components of the reaction mixture with a solid adsorbent, capable of adsorbing ions of alkali(ne earth) metal salts, followed by at least partly removal of alkali(ne earth) metal-enriched adsorbent.

6. A process as claimed in claim 5, characterized in that the solid adsorbent comprises one or more ion exchange resins containing anion exchanging and cation exchanging groups on a matrix, optionally combined on a single matrix.

7. A process as claimed in claim 5 or 6, characterized in that the amount of solid adsorbent is in the range of 0.000001 to 0.5% by weight of the component(s) treated.

8. A process as claimed in any of claims 1-7, characterized in that the catalyst system contains at least one metal of Group VIII of the Periodic Table and is used in an amount such that per mol of ethylenically unsaturated compound to be copolymerized it contains 10⁻⁶ - 10⁻⁴ gram atom of Group VIII metal.

9. A process as claimed in claim 8, characterized in that a catalyst system is used which is based on palladium as Group VIII metal, an anion of an acid with a pKa of less than 4 and a bidentate ligand of the general formula R¹R²M¹-R-M²R³R⁴ wherein each of M¹ and M² independently represents a phosphorus, arsenic, antimony or nitrogen atom, each of R¹, R², R³ and R⁴ independently represents a substituted or non-substituted hydrocarbyl group and R represents a divalent organic bridging group containing at least two carbon atoms in the bridge.

10. A process as claimed in claim 9, characterized in that a catalyst system is used comprising a bidentate ligand of the general formula R¹R²P-R-PR³R⁴ wherein at least one of R¹, R², R³ and R⁴ represents an aromatic group substituted by a polar group, in particular an alkoxy group, at one or both ortho positions with respect to the phosphorus atom to which the aromatic group is linked.

11. A process as claimed in any of claims 1-10, characterized in that as ethylenically unsaturated compound ethene or a mixture of ethene and propene is used, in that the molar ratio between carbon monoxide on the one hand and the ethylenically unsaturated compound(s) on the other, is in the range from 5:1 to 1:5, in particular in the range from 1.5:1 to 1:1.5, and in that the reaction is carried out in the presence of a protic diluent, for example methanol, at a temperature in the range of 30 - 150 °C and at a pressure in the range of 5 to 100 bar.

12. A method for improving the melt stability of a linear alternating copolymer of carbon monoxide and one or more ethylenically unsaturated compounds comprising washing a preformed reactor powder of the copolymer which contains a contaminant comprising an alkali(ne earth) metal salt with a washing liquid which is able to remove at least part of the alkali(ne earth) metal salt(s) from the copolymer.

13. A copolymer composition comprising a linear alternating copolymer of carbon monoxide and one or more ethylenically unsaturated compounds, a contaminant comprising an alkali(ne earth) metal salt and a stabilizing quantity of a substance which is able to bind at least part of the alkali(ne earth) metal salt, the substance being other than a hydroxyapatite, a zinc aluminate, an alumina hydrogel or a decomposition product thereof, or a zeolite-type trivalent metal silicate.

14. A copolymer composition as claimed in claim 13, characterized in that the substance which is able to bind at least part of the alkali(ne earth) metal salt is selected from the group consisting of barium phosphate, lanthanium phosphate, zirconium phosphate, magnesium orthophosphate, calcium silicium phosphate, magnesium silicium phosphate, aluminium phosphate and fluorapatite.

15. A copolymer composition as claimed in claim 14, characterized in that the substance which is able to bind at least part of the alkali(ne earth) metal salt is selected from the group consisting of lanthanium phosphate, magnesium silicium phosphate and calcium silicium phosphate.

16. A copolymer composition as claimed in any of claims 13 - 15, characterized in that the substance which is able to bind at least part of the alkali(ne earth) metal salt is used in a quantity of in the range of from 0.02 %w to 1.0 w%, relative to the quantity of the copolymer.

17. A copolymer composition as claimed in claim 16, characterized in that the substance which is able to bind at least part of the alkali(ne earth) metal salt is used in a quantity of in the range of from 0.05 %w to 0.5 w%, relative to the quantity of the copolymer.

18. A method for melt processing a linear alternating copolymer of carbon monoxide and one or more ethylenically unsaturated compounds, wherein a linear alternating copolymer of carbon monoxide and one or more ethylenically unsaturated compounds which contains a contaminant comprising an alkali(ne earth) metal salt is mixed with a stabilizing quantity of a substance which is able to bind at least part of the alkali(ne earth) metal salt, the substance being other than a hydroxyapatite, a zinc aluminate, an aluminium hydrogel or a decomposition product thereof, or a zeolite-type trivalent metal silicate, and wherein the resulting mixture is melt processed, such as by extruzion or injection moulding.

## Patentansprüche

1. Verfahren zur Herstellung von linearen alternierenden Copolymeren aus Kohlenmonoxid und einer oder mehreren ethylenisch ungesättigten Verbindungen durch Umsetzen der Monomeren unter Polymerisationsbedingungen in Anwesenheit eines geeigneten Katalysatorsystems, wobei eine oder mehrere, im Reaktionsgemisch vorliegende Komponenten mit (Erd)alkalimetallsalz(en) verunreinigt sind, welches Verfahren eine Behandlung einschließt, durch die wenigstens ein Teil des (Erd)alkalimetallsalzes derart abgetrennt wird, daß die im Copolymerisationsprodukt vorliegende Gesamtmenge an (Erd)alkalimetallen verringert wird, mit der Maßgabe, daß die Behandlung nicht aus einem Zusetzen eines Hydroxyapatits, eines Zinkaluminats, eines Aluminiumoxidhydrogels oder eines Zersetzungsproduktes hievon oder eines dreiwertigen Metallsilikats vom Zeolithtyp zum Copolymerisationsprodukt besteht.

2. Verfahren nach Anspruch 1, dadurch gekennzeichnet, daß in dem Copolymerisationsprodukt die Gesamtmenge an (Erd)alkalimetallen weniger als 1 Gewichtsteil pro Million beträgt.

3. Verfahren nach Anspruch 2, dadurch gekennzeichnet, daß die Gesamtmenge an (Erd)alkalimetallen weniger als 0,1 Gewichtsteil pro Million beträgt.

4. Verfahren nach einem der Ansprüche 1 bis 3, dadurch gekennzeichnet, daß die Behandlung während oder vor der Copolymerisationsreaktion ausgeführt wird und das Behandeln einer oder mehrerer, (Erd)alkalimetall(e) enthaltender Komponenten des Reaktionsgemisches vor dem Einführen in den Copolymerisationsreaktor umfaßt.

5. Verfahren nach Anspruch 4, dadurch gekennzeichnet, daß diese Behandlung in einem Kontaktieren einer oder mehrerer Komponenten des Reaktionsgemisches mit einem festen Adsorptionsmittel, das zum Adsorbieren von Ionen von (Erd)alkalimetallsalzen befähigt ist, gefolgt von einer zumindest teilweisen Abtrennung des (Erd)alkalimetall-angereicherten Adsorptionsmittels, besteht.

6. Verfahren nach Anspruch 5, dadurch gekennzeichnet, daß das feste Adsorptionsmittel ein oder mehrere Ionenaustauscherharze mit einem Gehalt an anionenaustauschenden Gruppen und kationenaustauschenden Gruppen auf einer Matrix umfaßt, gegebenenfalls kombiniert auf einer einzigen Matrix.

7. Verfahren nach Anspruch 5 oder 6, dadurch gekennzeichnet, daß die Menge an festem Adsorptionsmittel im Bereich von 0,000001 bis 0,5 Gew.-% der behandelten Komponente(n) liegt.

8. Verfahren nach einem der Ansprüche 1 bis 7, dadurch gekennzeichnet, daß das Katalysatorsystem wenigstens ein Metall aus der Gruppe VIII des Periodensystems enthält und in einer solchen Menge verwendet wird, daß es pro Mol ungesättigter, zu copolymerisierender Verbindung 10⁻⁶ bis 10⁻⁴ Grammatom Gruppe VIII-Metall enthält.

9. Verfahren nach Anspruch 8, dadurch gekennzeichnet, daß ein Katalysatorsystem verwendet wird, das auf Palladium als Gruppe VIII-Metall, einem Anion einer Säure mit einem pKa-Wert von kleiner als 4 und auf einem Bidentatliganden mit der allgemeinen Formel R¹R²M¹-R-M²R³R⁴ beruht, worin jedes von M¹ und M² unabhängig ein Phosphor-, Arsen-, Antimon- oder Stickstoffatom bedeutet, jeder Rest R¹, R², R³ und R⁴ unabhängig für eine substituierte oder unsubstituierte Hydrocarbylgruppe steht und R eine zweiwertige organische Brückengruppe darstellt, die wenigstens zwei Kohlenstoffatome in der Brücke enthält.

10. Verfahren nach Anspruch 9, dadurch gekennzeichnet, daß ein Katalysatorsystem verwendet wird, das einen Bidentatliganden mit der allgemeinen Formel R¹R²P-R-PR³R⁴ umfaßt, worin wenigstens einer der Reste R¹, R², R³ und R⁴ eine aromatische Gruppe darstellt, die durch eine polare Gruppe, insbesondere eine Alkoxygruppe, an einer oder an beiden ortho-Stellungen hinsichtlich des Phosphoratoms substituiert ist, an das die aromatische Gruppe gebunden ist.

11. Verfahren nach einem der Ansprüche 1 bis 10, dadurch gekennzeichnet, daß als ethylenisch ungesättigte Verbindung Ethen oder ein Gemisch aus Ethen und Propen eingesetzt wird, daß das Molverhältnis zwischen Kohlenmonoxid einerseits und der/den ethylenisch ungesättigten Verbindung(en) anderseits im Bereich von 5:1 bis 1:5, insbesondere im Bereich von 1,5:1 bis 1:1,5 liegt und daß die Umsetzung in Anwesenheit eines protischen Verdünnungsmittels, beispielsweise Methanol, bei einer Temperatur im Bereich von 30 bis 150°C und bei einem Druck von 5 bis 100 bar ausgeführt wird.

12. Verfahren zur Verbesserung der Schmelzstabilität eines linearen alternierenden Copolymers aus Kohlenmonoxid und einer oder mehrerer ethylenisch ungesättigten Verbindungen, umfassend ein Waschen eines vorgebildeten Reaktorpulvers des Copolymers, das eine ein (Erd)alkalimetallsalz umfassende Verunreinigung enthält, mit einer Waschflüssigkeit, die zur Abtrennung wenigstens eines Teils des/der (Erd)alkalimetallsalze (s) aus dem Copolymer befähigt ist.

13. Copolymerzusammensetzung mit einem Gehalt an einem linearen alternierenden Copolymer aus Kohlenmonoxid und einer oder mehreren ethylenisch ungesättigten Verbindungen, an einer ein (Erd)alkalimetallsalz umfassenden Verunreinigung und an einer stabilisierenden Menge einer Substanz, die zum Binden wenigstens eines Teiles des (Erd)alkalimetallsalzes befähigt ist, welches Substanz von einem Hydroxyapatit, einem Zinkaluminat, einem Aluminiumoxidhydrogel oder einem Zersetzungsprodukt hievon oder einem dreiwertigen Metallsilikat vom Zeolithtyp verschieden ist.

14. Copolymerzusammensetzung nach Anspruch 13, dadurch gekennzeichnet, daß die Substanz, die zum Binden wenigstens eines Teils des (Erd)alkalimetallsalzese befähigt ist, aus der Gruppe ausgewählt ist, die aus Bariumphosphat, Lanthanphosphat, Zirkoniumphosphat, Magnesiumorthophosphat, Calciumsiliziumphosphat, Magnesiumsiliziumphosphat, Aluminiumphosphat und Fluorapatit besteht.

15. Copolymerzusammensetzung nach Anspruch 14, dadurch gekennzeichnet, daß die Substanz, die zum Binden wenigstens eines Teils des (Erd)alkalimetallsalzes befähigt ist, aus der aus Lanthanphosphat, Magnesiumsiliziumphosphat und Calciumsiliziumphosphat bestehenden Gruppe ausgewählt ist.

16. Copolymerzusammensetzung nach einem der Ansprüche 13 bis 15, dadurch gekennzeichnet, daß die Substanz, die zum Binden wenigstens eines Teils des (Erd)alkalimetallsalzes befähigt ist, in einer Menge im Bereich von 0,02 bis 1,0 Gew.-%, bezogen auf die Menge des Copolymers, verwendet wird.

17. Copolymerzusammensetzung nach Anspruch 16, dadurch gekennzeichnet, daß die Substanz, die zum Binden wenigstens eines Teils des (Erd)alkalimetallsalzes befähigt ist, in einer Menge im Bereich von 0,05 bis 0,5 Gew.-%, bezogen auf die Menge des Copolymers, verwendet wird.

18. Verfahren zum Schmelzverarbeiten eines linearen alternierenden Copolymers aus Kohlenmonoxid und einer oder mehreren ethylenisch ungesättigten Verbindungen, worin ein lineares alternierendes Copolymer aus Kohlenmonoxid und einer oder mehreren ethylenisch ungesättigten Verbindungen, das eine ein (Erd)alkalimetallsalz umfassende Verunreinigung enthält, mit einer stabilisierenden Menge einer Substanz vermischt wird, die zum Binden wenigstens eines Teils des (Erd)alkalimetallsalzes befähigt ist, wobei die Substanz eine von einem Hydroxyapatit, einem Zinkaluminat, einem Aluminiumoxidhydrogel oder einem Zersetzungsprodukt hievon oder einem dreiwertigen Metallsilikat vom Zeolithtyp vrschiedene Substanz ist, und worin das erhaltene Gemisch in der Schmelze verarbeitet wird, wie durch Extrusions- oder Injektionsformen.

## Revendications

1. Procédé de préparation de copolymères alternants et linéaires du monoxyde de carbone et d'un ou plusieurs composés éthyléniquement insaturés par la réaction des monomères dans des conditions de polymérisation et en présence d'un système catalytique approprié, un ou plusieurs composants présents dans le mélange réactionnel étant contaminés par un ou des sels de métaux alcalin ou alcalino-terreux, lequel procédé implique un traitement conformément auquel au moins une partie du ou des sels de métaux alcalins ou alcalino-terreux est éliminée en une manière telle que la quantité totale des métaux alcalins ou alcalino-terreux présents dans le produit de la copolymérisation soit diminuée, avec le sous-entendu que le traitement n'est pas constitué par l'addition au produit de la copolymérisation d'une hydroxyapatite, d'un aluminate de zinc, d'un hydrogel d'alumine ou d'un produit de décomposition de ceux-ci, ou d'un silicate de métal trivalent du type zéolite.

2. Procédé suivant la revendication 1, caractérisé en ce que dans le produit de la copolymérisation, la quantité totale des métaux alcalins ou alcalino-terreux est inférieure à 1 partie par million en poids.

3. Procédé suivant la revendication 2, caractérisé en ce que la quantité totale des métaux alcalins ou alcalino-terreux est inférieure à 0,1 partie par million en poids.

4. Procédé suivant l'une quelconque des revendications 1 à 3, caractérisé en ce que l'on entreprend ledit traitement pendant ou avant la réaction de copolymérisation et il comprend le traitement d'un ou plusieurs composants contenant un ou plusieurs métaux alcalins ou alcalino-terreux du mélange réactionnel avant l'introduction dans le réacteur de copolymérisation.

5. Procédé suivant la revendication 4, caractérisé en ce que ledit traitement est constitué par la mise en contact d'un ou plusieurs des composants du mélange réactionnel avec un adsorbant solide, capable d'adsorber des ions de sels de métaux alcalins ou alcalino-terreux, opération suivie d'au moins l'élimination partielle de l'adsorbant enrichi en métal ou métaux alcalins ou alcalino-terreux.

6. Procédé suivant la revendication 5, caractérisé en ce que l'adsorbant solide comprend une ou plusieurs résines échangeuses d'ions contenant des groupes échangeurs d'anions et des groupes échangeurs de cations sur une matrice, éventuellement combinés sur une seule matrice.

7. Procédé suivant la revendication 5 ou 6, caractérisé en ce que la quantité d'adsorbant solide varie dans la plage de 0,000001 à 0,5% en poids du ou des composants traités.

8. Procédé suivant l'une quelconque des revendications 1 à 7, caractérisé en ce que le système catalytique contient au moins un métal du groupe VIII du tableau périodique et est utilisé en une quantité telle que, par mole de composé éthyléniquement insaturé à copolymériser, il contienne 10⁻⁶ à 10⁻⁴ atome-gramme de métal du groupe VIII.

9. Procédé suivant la revendication 8, caractérisé en ce que l'on utilise un système catalytique qui est basé sur le palladium à titre de métal du groupe VIII, un anion d'un acide qui possède un pKa inférieur à 4 et un ligand bidentate de la formule R¹R²M¹-R-M²R³R⁴, dans laquelle chacun des symboles M¹ et M² représente indépendamment un atome de phosphore, d'arsenic, d'antimoine ou d'azote, chacun des symboles R¹, R², R³ et R⁴ représente indépendamment un radical hydrocarbyle substitué ou non substitué et R représente un groupe de pontage organique divalent contenant au moins deux atomes de carbone dans le pont.

10. Procédé suivant la revendication 9, caractérisé en ce que l'on utilise un système catalytique comprenant un ligand bidentate de la formule générale R¹R²P-R-PR³R⁴, dans laquelle au moins l'un des symboles R¹, R², R³ et R⁴ représente un radical aromatique substitué par un groupe polaire, plus particulièrement, un groupe alcoxy sur l'une ou les deux positions ortho par rapport à l'atome de phosphore auquel le radical aromatique est lié.

11. Procédé suivant l'une quelconque des revendications 1 à 10, caractérisé en ce que, à titre de composé éthyléniquement insaturé, on utilise l'éthéne ou un mélange d'éthéne et de propène, en ce que le rapport molaire entre le monoxyde de carbone, d'une part, et le ou les composés éthyléniquement insaturés, d'autre part, varie de 5:1 à 1:5, en particulier, de 1,5:1 à 1:1,5, et en ce que l'on entreprend la réaction en présence d'un diluant protique, par exemple, le méthanol, dans une plage de températures de 30 à 150°C et sous une pression qui varie de 5 à 100 bars.

12. Procédé pour améliorer la stabilité à l'état fondu d'un copolymère alternant et linéaire du monoxyde de carbone et d'un ou plusieurs composés éthyléniquement insaturés, qui comprend le lavage d'une poudre de réaction préformée du copolymère qui contient une substance contaminante comprenant un sel de métal alcalin ou de métal alcalino-terreux, par un liquide de lavage qui est capable d'éliminer au moins une partie du ou des sels de métaux alcalins ou de métaux alcalino-terreux du copolymère.

13. Composition de copolymère comprenant un copolymère alternant et linéaire du monoxyde de carbone et d'un ou plusieurs composés éthyléniquement insaturés, une substance contaminante comprenant un sel de métal alcalin ou de métal alcalino-terreux et une quantité stabilisatrice d'une substance qui est capable de lier au moins une partie du sel de métal alcalin ou de métal alcalino-terreux, la substance étant autre qu'une hydroxyapatite, qu'un aluminate de zinc, qu'un hydrogel d'alumine ou qu'un produit de décomposition de ceux-ci ou qu'un silicate de métal trivalent du type zéolite.

14. Composition de copolymère suivant la revendication 13, caractérisée en ce que la substance qui est capable de lier au moins une partie du sel de métal alcalin ou de métal alcalino-terreux est choisie dans le groupe formé par le phosphate de baryum, le phosphate de lanthane, le phosphate de zirconium, l'orthophosphate de magnésium, le phosphate de calcium-silicium, le phosphate de magnésium-silicium, le phosphate d'aluminium et la fluorapatite.

15. Composition de copolymère suivant la revendication 14, caractérisée en ce que la substance qui est capable de lier au moins une partie du sel de métal alcalin ou de métal alcalino-terreux est choisie dans le groupe formé par le phosphate de lanthane, le phosphate de magnésium-silicium et le phosphate de calcium-silicium.

16. Composition de copolymére suivant l'une quelconque des revendications 13 à 15, caractérisée en ce que la substance qui est capable de lier au moins une partie du sel de métal alcalin ou de métal alcalino-terreux est utilisée en une quantité qui varie de 0,02% en poids à 1,0% en poids, par rapport à la quantité du copolymère.

17. Composition de copolymère suivant la revendication 16, caractérisée en ce que la substance qui est capable de lieur au moins une partie du sel de métal alcalin ou de métal alcalino-terreux est utilisée en une quantité qui varie de 0,05% en poids à 0,5% en poids, par rapport à la quantité du copolymère.

18. Procédé de traitement à l'état fondu d'un copolymère alternant et linéaire du monoxyde de carbone et d'un ou plusieurs composés éthyléniquement insaturés, conformément auquel un copolymère alternant et linéaire du monoxyde de carbone et d'un ou plusieurs composés éthyléniquement insaturés, qui contient une substance contaminante comprenant un sel de métal alcalin ou de métal alcalino-terreux est mélangé à une quantité stabilisatrice d'une substance qui est capable de lier au moins une partie du sel de métal alcalin ou de métal alcalino-terreux, la substance étant autre qu'une hydroxyapatite, qu'un aluminate de zinc, qu'un hydrogel d'alumine ou qu'un produit de décomposition de ceux-ci ou qu'un silicate de métal trivalent du type zéolite et en ce que le mélange ainsi obtenu est traité à l'état fondu, comme par extrusion ou par moulage par injection.
